# EUROPÄISCHE PATENTSCHRIFT

(11) **EP 3 438 626 B1**
(45) Veröffentlichungstag und Bekanntmachung des Hinweises auf die Patenterteilung: **15.09.2021**
(21) Anmeldenummer: 18175517.4
(22) Anmeldetag: 01.06.2018
(51) Int. Cl.: G01K 7/34

(54) **SENSORLEITUNG**
SENSOR CABLE
CÂBLE CAPTEUR

(30) Priorität: 02.08.2017 DE 102017213382
(43) Veröffentlichungstag der Anmeldung: 06.02.2019
(73) Patentinhaber: LEONI Kabel GmbH, 91154 Roth (DE)
(72) Erfinder: Janssen, Bernd, 26169 Friesoythe (DE); Weber, Heiko, 26845 Nortmoor (DE)
(74) Vertreter: Frenkel, Matthias Alexander

(56) Entgegenhaltungen:
- EP-A1- 2 635 924
- EP-A2- 2 942 648
- DE-A1-102013 227 051
- JP-U- H04 115 039
- US-A- 3 938 385

## Beschreibung

Die Erfindung betrifft eine Sensorleitung, ein geschirmtes Paar oder einen Sternvierer und ein System beziehungsweise ein Verfahren zum Detektieren eines äußeren Einflusses auf ein Kabel sowie ein Verfahren zur Bestimmung einer Temperatur oder einer Temperaturänderung.

Sensorleitungen können gemäß dem Stand der Technik koaxial aufgebaut sein, wobei diese Sensorleitungen darauf basieren, dass Signale auf die Leitung gegeben werden und aus den Messergebnissen wie z.B. Reflexionen unterschiedliche Informationen ermittelt werden können.

Messungen, die mit solchen koaxial aufgebauten Leitungen als Sensor aufgenommen werden, können zum Beispiel mittels Time-Domain-Reflectometry (TDR) und Frequency-Domain-Reflectometry (FDR, mittels Vektor-Netzwerk-Analysatoren (VNA)) ausgewertet werden.

Ein Problem beim koaxialen Aufbau ist jedoch, dass diese Leitungen anfälliger für elektromagnetische Einflüsse sind, als symmetrisch aufgebaute Leitungen. Dies liegt unter anderem daran, dass der Schirm als Rückleiter dient, jedoch gleichzeitig eine Art Antenne für äußere Störsignale bildet. Außerdem erzeugen Koaxialleitungen selbst stärkere Störgrößen für deren Umfeld.

In Sensorleitungen wurden bis jetzt, soweit bekannt, keine Effekte, wie zum Beispiel die Mode Conversion oder Skew ausgenutzt, um hieraus Informationen zu erlangen. Mit einer Koaxialleitung wird weiterhin lediglich ein Parameter zur Analyse verwendet (S11 beziehungsweise T11).

Beim koaxialen Sensorelement wird das rücklaufende Signal (Reflexion, die zur Analyse benötigt wird) mit dem gesendeten Signal überlagert, sodass unter Umständen zum Beispiel ein Richtkoppler notwendig sein kann.

Stand der Technik findet sich in der DE 10 2013 227 051 A1, die allgemein eine Messanordnung und ein Verfahren zur Temperaturmessung sowie ein Sensorkabel für eine derartige Messanordnung offenbart, und in der JP H04 115 039 U, die allgemein ein Verfahren zum Detektieren eines abnormalen Aufheizens offenbart.

Ferner offenbaren die Dokumente EP 2 942 648 A2 und EP 2 635 924 A1 jeweils Vorrichtungen und Verfahren zur Bestimmung einer mechanischen Überbelastung von Kabeln.

Im Hinblick auf das Obige, bedürfen Kabel beziehungsweise Sensorleitungen für Kabel weiterer Verbesserungen, um äußere Einflüsse auf die Kabel genauer beziehungsweise überhaupt detektieren zu können.

Die vorliegende Erfindung ist in den unabhängigen Ansprüchen dargelegt. Bevorzugte Ausgestaltungsformen der Erfindung finden sich in den abhängigen Ansprüchen.

Der Erfindung liegt eine Sensorleitung zu Grunde, die ein Aderpaar umfasst, wobei die beiden Adern des Aderpaares von Dielektrika mit jeweils unterschiedlichen Eigenschaften in zumindest einem Bereich der Sensorleitung umgeben sind.

Das Messprinzip lässt sich hierbei im Zeitbereich (Skew-Messung), als auch im Frequenzbereich (VNA-Messung) anwenden, sowie, wie in manchen Ausgestaltungsformen angewandt, in einfacher Weise bei einer festen Frequenz (zum Beispiel unter Anwendung eines Sinus-Generators mit Amplituden-Messgerät, wobei die Frequenz unter Umständen auf die Leitungslänge und den Messbereich angepasst werden muss - siehe unten).

Im Falle einer Asymmetrie entsteht somit Skew und/oder Mode Conversion, die detektiert werden können. Der äußere Einfluss auf das Kabel kann somit detektiert und analysiert werden, da der äußere Einfluss unmittelbar eine Änderung der Eigenschaft des ersten Dielektrikums in dem zumindest einen Bereich der Sensorleitung bewirkt, wodurch sich die Eigenschaft der ersten elektrisch leitfähigen Ader ändern kann.

Es sei hierbei angemerkt, dass gemäß mancher Ausgestaltungsformen das erste beziehungsweise zweite Dielektrikum die erste beziehungsweise zweite elektrisch leitfähige Ader komplett, das heißt auf einer Gesamtlänge der Sensorleitung umgeben können.

Nachfolgend werden Ausführungsbeispiele der Erfindung anhand der Zeichnungen näher beschrieben.

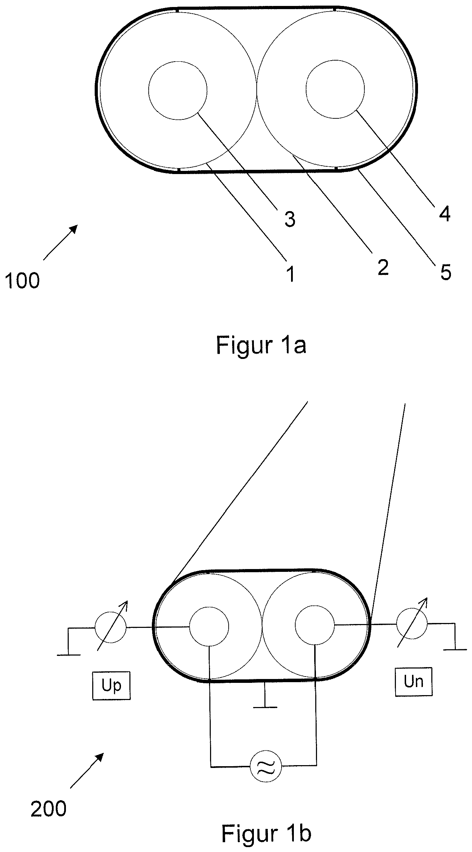

Figuren 1a und b zeigen schematisch eine Sensorleitung beziehungsweise ein System gemäß Ausgestaltungsformen der hierin beschrieben Erfindung.

Wie oben erwähnt, liegt ein Problem beim koaxialen Aufbau, dass diese Leitungen anfälliger für elektromagnetische Einflüsse sind im Vergleich zu symmetrisch aufgebauten Leitungen. Dies kann daran liegen, dass der Schirm als Rückleiter dient, jedoch auch eine Antenne bildet. Weiterhin können Koaxialleitungen selbst stärkere Störgrößen für deren Umfeld erzeugen. Mit einer Koaxialleitung wird weiterhin lediglich ein Parameter zur Analyse verwendet (S11 beziehungsweise T11). Da beim koaxialen Sensorelement das rücklaufende Signal vom gesendeten Signal überlagert wird, ist ein Richtkoppler unter Umständen notwendig.

In der Regel ist das Ziel, beide Adern eines Paares möglichst gleich (das heißt symmetrisch) aufzubauen hinsichtlich der Abmessungen und der Dielektrizitätskonstante, um die Signalmodi (Mode Conversion) während der Übertragung nicht zu ändern. Im Falle von unterschiedlichen Dielektrizitätskonstanten breiten sich die beiden Teile des gesendeten Signales mit unterschiedlichen Signalgeschwindigkeiten aus und es entsteht ein sogenannter Skew im Zeitbereich beziehungsweise Mode Conversion im Frequenzbereich. Dies gilt sowohl vom odd (Gegentakt-) in den even (Gleichtakt-) mode, als auch umgekehrt und gilt für übertragene Signale als auch für reflektierte Signale. In manchen Ausgestaltungsformen der gegenwärtigen Erfindung wird dieser Effekt so genutzt, dass beide Adern ähnliche Abmessungen und, zum Beispiel bei Raumtemperaturen, auch eine ähnliche Dielektrizitätskonstanten haben. Die beiden Adern sind in manchen Beispielen allerdings mit unterschiedlichen Materialien isoliert, wobei - im Falle einer Temperaturmessung - mindestens ein Material in Abhängigkeit der Temperatur die Dielektrizitätsvariable ändert. Anhand des so entstehenden Skew beziehungsweise Mode Conversion lässt sich mittels mancher Ausgestaltungsformen die Temperatur bestimmen. Hierzu kann es unter Umständen notwendig sein, einen Bezugspunkt zu nutzen, bezüglich dessen eine eventuelle Eichung ermöglicht wird, um die absolute Temperatur ermitteln zu können.

Das Messprinzip lässt sich im Zeitbereich anwenden (Skew-Messung) als auch im Frequenzbereich (VNA-Messung), als auch in einfacherer Weise bei einer festen Frequenz (zum Beispiel Sinus-Generator mit Amplituden-Messgerät, wobei, in manchen Ausgestaltungsformen, die Frequenz auf Leitungslänge und Messbereich angepasst werden muss).

Erfindungsgemäß ist eine der beiden Adern so ausgebildet, dass sie sich im Falle eines Medieneinbruches und/oder unter mechanischer Belastung gewollt anders verhält als die andere Ader. Zum Beispiel können eine relativ (zur anderen Ader) kompressible, das heißt weiche Ader und relativ inkompressible, das heißt harte Ader verwendet werden. Unter einer mechanischen Belastung kann sich die weiche Ader mehr zusammendrücken als die harte Ader, sodass Mode Conversion entstehen kann.

Die beiden Adern der Sensorleitung fungieren als eine Art Komparator.

Sofern nicht notwendigerweise verlangt wird, dass Ort und Größe der Störung präzise bestimmt werden müssen, kann es ausreichend sein, bei einer festen Frequenz ein (z.B. Sinus-) Signal zwischen den beiden Adern einzubringen und das reflektierte oder transmittierte Signal zwischen den beiden Adern und Schirm zu messen. Der umgekehrte Fall ist genauso realisierbar. Bei hoher Symmetrie ist das Messsignal 0, bei Asymmetrie (Beeinflussung zum Beispiel durch Temperaturänderungen, mechanischer Belastung etc.) dagegen nicht. Die Höhe der Mode Conversion ist abhängig von Länge/Größe der Asymmetrie sowie von der Frequenz.

Somit nutzen Ausgestaltungsformen der gegenwärtigen Erfindung Effekte wie Mode Conversion und/oder Skew aus, um hieraus Informationen bezüglich äußerer Einflüsse auf das Kabel zu erlangen.

Figur 1a zeigt schematisch eine Sensorleitung 100 gemäß einer Ausgestaltungsform der hierin beschriebenen Erfindung.

In diesem Beispiel umfasst die Sensorleitung 100 ein erstes Dielektrikum 1, eine erste elektrisch leitfähige Ader 3, ein zweites Dielektrikum 2 und eine zweite elektrisch leitfähige Ader 4. Ferner umfasst die Sensorleitung 100 in diesem Beispiel einen Schirm 5.

Figur 1b zeigt schematisch einen Messaufbau 200 zur Detektion eines äußeren Einflusses auf ein Kabel.

Während des oben genannten odd mode wird ein Signal zwischen der ersten elektrisch leitfähigen Ader 3 und der zweiten elektrisch leitfähigen Ader 4 angelegt. Während des even mode wird ein Signal zwischen den elektrisch leitfähigen Adern 3+4 und dem Schirm 5 angelegt.

In diesem Beispiel besitzt das Dielektrikum 1 im Vergleich zum Dielektrikum 2 unterschiedliche Eigenschaften unter dem Einfluss mechanischer und/oder thermischer Umstände.

Wie oben beschrieben, können nun andere S- beziehungsweise T-Parameter im Vergleich zur Koaxialleitung zur Auswertung miteinbezogen werden. Obiges Beispiel nutzt die Mode Conversion zur Sensorik. Weiterhin wird in manchen Ausgestaltungsformen ein Sternvierer (umfassend 4 Adern) als Sensor eingesetzt, wobei dann zum Beispiel auch das Nebensprechen als Information verwendet werden kann.

Die Problematik der elektromagnetischen Verträglichkeit wird mit der symmetrischen Leitung je nach gemessenen Paramatern umgangen. Im Falle der Parameter Sdd11 beziehungsweise Tdd11 ist der Einfluss in der Regel äußerst gering, da der Schirm weder Hin- noch Rückleiter darstellt. Bei den Parametern Scc11 beziehungsweise Tcc11 gleicht der Einfluss jedoch dem des Koaxialelements.

In symmetrischen Leitungen gemäß des Standes der Technik sind die Adern nicht absichtlich beziehungsweise bewusst mit unterschiedlichen Eigenschaften konzipiert, damit verschiedene Einflüsse und Zustände detektiert werden können. Mit der symmetrischen Leitung gemäß Ausgestaltungsformen der hierin beschriebenen Erfindung können nun 3 Parameter zur Analyse herangezogen werden: Sdd11, Scd11 und Scc11 bzw. Tdd11, Tcd11 und Tcc11.

Ein rücklaufendes Signal (Reflexion, die zur Analyse benötigt wird) entsteht bei den Parametern Scd11/Tcd11, Sdc11/Tcd11 nur, wenn eine Asymmetrie vorhanden ist, wobei das rücklaufende Signal von der Asymmetrie abhängig ist. Das heißt, solange die Leitung symmetrisch ist, ist kaum ein Messsignal vorhanden. Sobald die Asymmetrie (zum Beispiel in Abhängigkeit der Temperatur oder des Druckes) ansteigt, entsteht ein Messsignal in Abhängigkeit der Störung. Gesendete und empfangene Signalanteile brauchen in diesem Fall nicht entkoppelt zu werden.

Vorteile der Ausgestaltungsformen der gegenwärtigen Erfindung sind u.a. ein einfacher Aufbau, ein relativ kostengünstiger Aufbau und, damit verbunden, relativ kostengünstige Verfahren zum Detektieren eines äußeren Einflusses auf ein Kabel, mehrere mögliche, bekannte Messprinzipien, die angewandt werden können, EMV-(elektromagnetische Störfestigkeit/Verträglichkeit) beziehungsweise EMI- (elektromagnetische Störausstrahlung) Unempfindlichkeit, Möglichkeit der Anwendung niedriger Messfrequenzen, Kompatibilität mit vielen Messsystemen und universelle Einsetzbarkeit.

Bei mehreren Aderpaaren in der symmetrischen Leitung kann unterschieden werden, ob zum Beispiel nur Druck auf eine der beiden Adern ausgeübt wird. Hierüber können Informationen bezüglich der Richtung (im Querschnitt) der Druckausübung auf die Adern hergeleitet werden. Es kann auch in manchen Ausgestaltungsformen festgestellt werden, in welche Richtung eine Leitung gebogen wird.

Symmetrische Leitungen haben in der Regel eine geringere Einfügedämpfung, sodass größere Einsatzlängen oder kleinere Durchmesser bei gleicher Einsatzlänge möglich sind.

Die Leitungskapazität ist in der Regel bei symmetrischen Leitungen geringer. Dadurch wird bei TDR-Messungen die Anstiegszeit des gesendeten Signals, was signifikant für die Qualität der Messung sein kann, weniger stark beeinflusst, woraufhin sich die Ortsauflösung verbessert.

Symmetrische Leitungen gemäß Ausgestaltungsformen der hierin beschriebenen Erfindung liefern im Vergleich zu Koaxialleitungen mehr Informationen, ermöglichen je nach Anschlussart und Messaufgabe einen einfacheren Aufbau (keine Richtkoppler, feste Frequenz, etc.), sind wesentlich sensibler und bieten eine bessere EMV-Performance.

Abschließend sei insbesondere darauf hingewiesen, dass die voranstehend erörterten Ausführungsbeispiele lediglich zur Beschreibung der beanspruchten Lehre dienen, diese jedoch nicht auf die Ausführungsbeispiele einschränken. Zum Beispiel sei hier erwähnt, dass die Sensorleitung in weiteren Fällen als intelligente Sensorleitung einsetzbar ist.

## Patentansprüche

1. Sensorleitung (100) zum Detektieren einer mechanischen Belastung und einer Temperatur auf ein Kabel, wobei die Sensorleitung (100) umfasst:
eine erste elektrisch leitfähige Ader (3), die in zumindest einem ersten Teilbereich von einem ersten Dielektrikum (1) umgeben ist, und
eine zweite elektrisch leitfähige Ader (4), die in zumindest einem zweiten Teilbereich von einem zweiten Dielektrikum (2) umgeben ist,
wobei die Sensorleitung (100) derart konfiguriert ist, dass die Dielektrizitätsvariable des ersten Dielektrikums (1) unter dem Einfluss der Temperatur in zumindest einem Bereich der Sensorleitung (100) veränderbar ist, und
wobei die Temperatur aufgrund einer Veränderung einer Signalgeschwindigkeit, v1, der ersten elektrisch leitfähigen Ader (3) bedingt durch die Veränderung der Dielektrizitätsvariable des ersten Dielektrikums (1) in dem zumindest einen Bereich der Sensorleitung (100) detektierbar ist,
wobei die erste elektrisch leitfähige Ader (3) in dem zumindest einen Bereich der Sensorleitung (100) eine erste Kompressibilität, k₁, aufweist,
wobei die zweite elektrisch leitfähige Ader (4) in dem zumindest einen Bereich der Sensorleitung (100) eine zweite Kompressibilität, k2, aufweist, und
wobei k₁ ≠ k2, und
wobei die Sensorleitung (100) derart konfiguriert ist, dass durch die mechanische Belastung die erste elektrisch leitfähige Ader (3) in dem zumindest einen Bereich um einen Faktor d₁ komprimiert wird, mit d₁ > 0 oder d₁ < 0, und die zweite elektrisch leitfähige Ader (4) in dem zumindest einen Bereich um einen Faktor d₂ komprimiert wird, mit d₂ > 0 oder d₂ < 0 oder d₂ = 0,
wobei d₁ ≠ d₂, und
wobei die Sensorleitung ferner derart konfiguriert ist, dass in der Sensorleitung aufgrund der Bedingung d₁ ≠ d₂ Mode Conversion und/oder Skew hervorrufbar ist, durch die die mechanische Belastung mit einem Zeit- oder Frequenzbereichsmessverfahren detektierbar ist.

2. Sensorleitung (100) nach Anspruch 1, wobei die Dielektrizitätsvariable des zweiten Dielektrikums (2) unter dem Einfluss der Temperatur in dem zumindest einen Bereich der Sensorleitung (100) veränderbar ist,
wobei eine Signalgeschwindigkeit, v₂, der zweiten elektrisch leitfähigen Ader (4) bedingt durch die Veränderung der Dielektrizitätsvariable des zweiten Dielektrikums (2) veränderbar ist,
wobei sich die Änderungen der Signalgeschwindigkeiten der ersten und zweiten elektrisch leitfähigen Adern, v₁ und v₂, unterscheiden, und
wobei die Temperatur mittels der unterschiedlichen Änderungen der Signalgeschwindigkeiten der ersten und zweiten elektrisch leitfähigen Adern (3, 4) detektierbar ist.

3. Sensorleitung (100) nach Anspruch 2, wobei durch die Änderung der Dielektrizitätsvariable des zweiten Dielektrikums (2) eine Änderung von v₂ um einen Betrag Δv₂ hervorrufbar ist, wobei Δv₁ ≠ Δv₂, und
wobei die Temperatur mittels einer Änderung der Differenz v₁ - v₂ um Δv₁ - Δv₂ detektierbar ist.

4. Sensorleitung (100) nach einem der vorhergehenden Ansprüche, wobei die Dielektrizitätsvariable des ersten Dielektrikums (1) temperaturabhängig ist.

5. Sensorleitung (100) nach einem der vorhergehenden Ansprüche, wobei die erste elektrisch leitfähige Ader (3) und die zweite elektrisch leitfähige Ader (4) im Wesentlichen gleiche Abmessungen und Dielektrizitätskonstanten aufweisen; und/oder
wobei die Sensorleitung (100) derart konfiguriert ist, dass die mechanische Belastung oder die Temperatur
(i) mittels der S-Parameter Sdd11, Scd11 und Scc11, und/oder
(ii) mittels der T-Parameter Tdd11, Tcd11 und Tcc11
detektierbar und/oder analysierbar ist.

6. Sternvierer umfassend die Sensorleitung (100) nach einem der vorhergehenden Ansprüche, wobei der Sternvierer konfiguriert ist, die mechanische Belastung mittels einer Nebensprechen-Information zu detektieren.

7. System umfassend:
die Sensorleitung (100) nach einem der Ansprüche 1 bis 5 oder den Sternvierer nach Anspruch 6, und
eine Messeinheit (200), die an die Sensorleitung (100) gekoppelt ist und konfiguriert ist, den die mechanische Belastung zu detektieren und/oder analysieren.

8. Verfahren zum Detektieren einer mechanischen Belastung eines Kabels, wobei das Verfahren umfasst:
- Bereitstellen einer Sensorleitung (100) nach einem der Ansprüche 1 bis 5;
- Detektieren einer Änderung eines Zusammendrückens der ersten elektrisch leitfähigen Ader (3) in zumindest einem Bereich der Sensorleitung (100) mittels einer Detektion einer Änderung einer Signalgeschwindigkeit der ersten elektrisch leitfähigen Ader (3) und/oder Detektieren eines Zusammendrückens der ersten elektrisch leitfähigen Ader (3) in dem zumindest einen Bereich der Sensorleitung mittels einer Detektion einer Änderung einer Signalgeschwindigkeit der zweiten elektrisch leitfähigen Ader, um die mechanische Belastung zu detektieren.

## Claims

1. Sensor line (100) for detecting a mechanical load and a temperature of a cable, wherein the sensor line (100) comprises:
a first electrically conductive wire (3), which is enclosed by a first dielectric (1) in at least a first sub-region, and
a second electrically conductive wire (4), which is enclosed by a second dielectric (2) in at least a second sub-region,
wherein the sensor line (100) is configured so that the dielectric variable of the first dielectric (1) is variable under the influence of the temperature in at least one region of the sensor line (100), and
wherein the temperature is detectable due to a change in a signal speed, v₁, of the first electrically conductive wire (3) caused by the change in the dielectric variable of the first dielectric (1) in the at least one region of the sensor line (100),
wherein the first electrically conductive wire (3) in the at least one region of the sensor line (100) has a first compressibility, k₁,
wherein the second electrically conductive wire (4) in the at least one region of the sensor line (100) has a second compressibility, k2, and
wherein k₁ ≠ k₂, and
wherein the sensor line (100) is configured in such a way that the first electrically conductive wire (3) in which at least one region is compressed by a factor d₁, wherein d₁ > 0 or d₁ < 0, and the second electrically conductive core (4) in which at least one region is compressed by a factor d₂, wherein d₂ > 0 or d₂ < 0 or d₂ = 0,
wherein d₁ ≠ d₂, and
wherein the sensor line is further configured in such a way that Mode Conversion and/or Skew can be caused in the sensor line on the basis of the condition d₁ ≠ d₂, based on which the mechanical load can be detected using a time or frequency range measurement method.

2. Sensor line (100) according to claim 1, wherein the dielectric variable of the second dielectric (2) is variable under the influence of the temperature in the at least one region of the sensor line (100),
wherein a signal speed, v₂, of the second electrically conductive wire (4) is variable caused by the change of the dielectric variable of the second dielectric (2),
wherein the changes in the signal speeds, v₁ and v₂, properties of the first and second electrically conductive wires differ, and
wherein the temperature is detectable by means of the different changes in the signal speeds of the first and second electrically conductive wires (3, 4).

3. Sensor line (100) according to claim 2, wherein due to the change in the dielectric variable of the second dielectric (2), a change in v₂ by an amount Δv₂ can be caused, wherein Δv₁ ≠ Δv₂, and
wherein the temperature is detectable by means of a change in the difference v₁ - v₂ by Δv₁ - Δv₂.

4. Sensor line (100) according to any one of the previous claims, wherein the dielectric variable of the first dielectric is temperature-dependent.

5. Sensor line (100) according to any one of the previous claims, wherein the first electrically conductive wire (3) and the second electrically conductive wire (4) have substantially identical dimensions and dielectric constants; and/or
wherein the sensor line (100) is configured so that the mechanical load or the temperature can be detected and/or analysed
(i) by means of the S-parameter Sdd11, Scd11 and Scc11, and/or
(ii) by means of the T-parameter Tdd11, Tcd11 and Tcc11.

6. Star quad comprising the sensor line (100) according to any one of the previous claims, wherein the star quad is configured to detect the mechanical load by means of crosstalk information.

7. System comprising:
the sensor line (100) according to any one of claims 1 to 5 or the star quad according to claim 6, and
a measuring unit (200), which is coupled to the sensor line (100) and configured to detect and/or analyse the mechanical load.

8. Method for detecting a mechanical load, which acts on a cable, wherein the method comprises:
- provision of a sensor line (100) according to one of the claims 1 to 5
- detection of a change in a compression of the first electrically conductive wire (3) in at least one region of the sensor line (100) by means of detection of a change in a signal speed of the first electrically conductive wire (3) and/or detection of a change in a compression of the first electrically conductive wire (3) in the at least one region of the sensor line by means of detection of a change in a signal speed of the second electrically conductive wire, in order to detect the mechanical load.

## Revendications

1. Ligne de détection (100) pour détecter une contrainte mécanique et une température sur un câble, la ligne de détection (100) comprenant :
un premier fil électriquement conducteur (3) qui est entouré, dans au moins une première zone partielle, par un premier diélectrique (1) et
un deuxième fil électriquement conducteur (4) qui est entouré, dans au moins une deuxième zone partielle par un deuxième diélectrique (2),
dans laquelle la ligne de détection (100) est configurée de telle sorte que la variable diélectrique du premier diélectrique (1) est variable sous l'influence de la température dans au moins une zone de la ligne de détection (100), et
dans laquelle la température est détectable en raison d'une variation d'une vitesse de signal, v1, du premier fil électriquement conducteur (3) due à la variation de la variable diélectrique du premier diélectrique (1) dans ladite au moins une zone de la ligne de détection (100),
dans laquelle le premier fil électriquement conducteur (3) a une première compressibilité, k₁, dans ladite au moins une zone de la ligne de détection (100),
dans laquelle le deuxième fil électriquement conducteur (4) a une deuxième compressibilité, k2, dans ladite au moins une zone de la ligne de détection (100), et
dans laquelle k1 ≠ k2, et
dans laquelle la ligne de détection (100) est configurée de telle sorte que, par la contrainte mécanique, le premier fil électriquement conducteur (3) est comprimé dans ladite au moins une zone d'un facteur d₁, avec d₁ > 0 ou d₁ < 0 et le deuxième fil électriquement conducteur (4) est comprimé dans ladite au moins une zone d'un facteur d2, avec d2 > 0 ou d2 < 0 ou d2 = 0,
dans laquelle d₁ ≠ d₂, et
dans laquelle la ligne de détection est en outre configurée de telle sorte qu'une conversion de mode (Mode Conversion) et/ou une asymétrie (Skew) peut être provoquée dans la ligne de détection en raison de la condition d₁ ≠ d₂, au moyen de laquelle la contrainte mécanique peut être détectée par un procédé de mesure dans le domaine temporel ou fréquentiel.

2. Ligne de détection (100) selon la revendication 1, dans laquelle la variable diélectrique du deuxième diélectrique (2) est variable sous l'influence de la température dans ladite au moins une zone de la ligne de détection (100),
dans laquelle une vitesse de signal, v₂, du deuxième fil électriquement conducteur (4) est variable en raison de la variation de la variable diélectrique du deuxième diélectrique (2),
dans laquelle les variations des vitesses de signal des premier et deuxième fils électriquement conducteurs, v₁ et v₂, diffèrent et
dans laquelle la température est détectable au moyen des différentes variations des vitesses de signal des premier et deuxième fils électriquement conducteurs (3, 4).

3. Ligne de détection (100) selon la revendication 2, dans laquelle la variation de la variable diélectrique du deuxième diélectrique (2) peut provoquer une variation de v₂ d'une quantité Δv₂, dans laquelle Δv₁ ≠ Δv₂, et
dans laquelle la température est détectable au moyen d'une variation de la différence v₁ - v₂ de Δv₁ - Δv₂.

4. Ligne de détection (100) selon l'une des revendications précédentes, dans laquelle la variable diélectrique du premier diélectrique (1) dépend de la température.

5. Ligne de détection (100) selon l'une des revendications précédentes, dans laquelle le premier fil électriquement conducteur (3) et le deuxième fil électriquement conducteur (4) ont des dimensions et des constantes diélectriques sensiblement égales ; et/ou
dans laquelle la ligne de détection (100) est configurée de telle sorte que la contrainte mécanique ou la température est détectable et/ou analysable
(i) au moyen des paramètres S Sdd11, Scd11 et Scc11 et/ou
(ii) au moyen des paramètres T Tdd11, Tcd11 et Tcc11.

6. Quarte en étoile comprenant la ligne de détection (100) selon l'une des revendications précédentes, dans laquelle la quarte en étoile est configurée pour détecter la contrainte mécanique au moyen d'une information de diaphonie.

7. Système comprenant :
la ligne de détection (100) selon l'une des revendications 1 à 5 ou la quarte en étoile selon la revendication 6, et
une unité de mesure (200) couplée à la ligne de détection (100) et configurée pour détecter et/ou analyser la contrainte mécanique.

8. Procédé pour détecter une contrainte mécanique d'un câble, le procédé comprenant :
- la fourniture d'une ligne de détection (100) selon l'une des revendications 1 à 5 ;
- la détection d'une variation d'une compression du premier fil électriquement conducteur (3) dans au moins une zone de la ligne de détection (100) au moyen d'une détection d'une variation d'une vitesse de signal du premier fil électriquement conducteur (3) et/ou la détection d'une compression du premier fil électriquement conducteur (3) dans ladite au moins une zone de la ligne de détection au moyen d'une détection d'une variation d'une vitesse de signal du deuxième fil électriquement conducteur pour détecter la contrainte mécanique.
